# EUROPEAN PATENT APPLICATION

(11) **EP 3 506 262 A1**
(43) Date of publication of application: **03.07.2019**
(21) Application number: 18207676.0
(22) Date of filing: 22.11.2018
(51) Int. Cl.: G11B 27/031, G11B 27/28, G06T 7/20, G08B 6/00, G06F 3/01

(54) **INTUITIVE HAPTIC DESIGN**

(30) Priority: 28.12.2017 US 201715856520
(71) Applicant: Immersion Corporation, San Jose, CA 95134 (US)
(72) Inventor: RIHN, William S., Redwood City, CA 94042 (US)
(74) Representative: Müller-Boré & Partner Patentanwälte PartG mbB

(57) **Abstract**

Designing haptics from a video includes tracking an audio/visual (A/V) element in realtime during playback of the video, and assigning a haptic effect in realtime for the A/V element to different positions of the A/V element on a timeline based on the tracking of the A/V element to generate assigned-haptic effect positions. A haptic playback track is generated based on the assigned-haptic effect positions of the A/V element on the timeline.

## Description

### FIELD

Example embodiments are directed to designing haptic feedback with spatialized haptics, and more particularly, to designing haptic feedback based on haptics spatialized by cross-referencing with multiple positions of an audio/video element.

### BACKGROUND

In conventional haptic design tools such as a digital audio workstation ("DAW") or a non-linear editing system ("NLE"), a single haptic playback track is usually generated for each position of a moving audio/visual ("A/V") element to be haptified.

### SUMMARY

Example embodiments provide for designing haptics by tracking an audio/visual (A/V) element in realtime during playback of a video; assigning a haptic effect in realtime for the A/V element to different positions of the A/V element on a timeline based on the tracking of the A/V element to generate assigned-haptic effect positions; and generating a haptic playback track based on the assigned-haptic effect positions of the A/V element on the timeline.

Using a virtual reality ("VR")/augmented reality ("AR") system or a realtime editing system, a first embodiment includes tracking of the A/V element by creating and placing a haptic emitter into a spatial environment of the video, moving the haptic emitter in the spatial environment with the A/V element in realtime during the playback of the video, and obtaining spatial data for the haptic emitter during the moving of the haptic emitter. The haptic effect is assigned for the A/V element by associating the spatial data of the haptic emitter with the different positions of the A/V element on the timeline in realtime.

Using a VR/AR system or a realtime editing system, a second embodiment includes the tracking of the A/V element by placing a particle effect into a spatial environment of the video, creating a path for the A/V element by moving the particle effect in the spatial environment in realtime during the playback of the video, and obtaining spatial data for the A/V element during the moving of the particle effect. The haptic effect is assigned for the A/V element by associating the spatial data of the A/V element with the different positions of the A/V element on the timeline in realtime.

Using an editing system, a third embodiment includes the tracking of the A/V element by obtaining spatial data of the A/V element by visually tracking the A/V element in realtime during the playback of the video. The haptic effect is assigned for the A/V element by associating the spatial data of the A/V element with the different positions of the A/V element on the timeline in realtime.

The aforementioned embodiments overcome the difficulty of adding haptics in a linear experience that has multiple viewing angles.

### BRIEF DESCRIPTION OF THE DRAWINGS

Example embodiments will be more clearly understood from the following detailed description taken in conjunction with the accompanying drawings. FIGS. 1-16 represent non-limiting, example embodiments as described herein.
FIG. 1 is a flow diagram of designing haptics according to example embodiments.
FIG. 2 is a flow diagram of designing haptics with an editing system according to an example embodiment.
FIGS. 3, 4 and 6-9 are diagrams of haptic effects according to example embodiments.
FIG. 5 is a diagram of spatialized haptics according to example embodiments.
FIG. 10 is a flow diagram of designing haptics with a VR/AR system or a realtime editing system according to an example embodiment.
FIG. 11 is block diagram of a haptic design system according to an example embodiment.
FIG. 12 is block diagram of realtime host system according to an example embodiment.
FIG. 13 is a block diagram of a haptic design system in an electronic device according to an example embodiment.
FIGS. 14-16 are images of haptic editing windows according to example embodiments.

### DETAILED DESCRIPTION

Example embodiments are directed to designing haptic feedback based on haptics spatialized by cross-referencing with multiple positions of an audio/video element, thereby resulting in a more immersive experience.

Haptics is a tactile and/or kinesthetic feedback technology that generates haptic feedback effects (also known as "haptic feedback" or "haptic effects"), such as forces, vibrations, and motions, for an individual using the individual's sense of touch. A haptically-enabled device can include embedded hardware (e.g., actuators or other output mechanisms) configured to apply the haptic effects. The embedded hardware is, generally, programmed to apply (or playback) a particular set of haptic effects. When a signal specifying which haptic effect(s) to play is received by the haptically-enabled device, the haptically-enabled device renders the specified haptic effect. For example, when an individual is intended to experience a haptic event, the embedded hardware of the haptically-enabled device receives a play command through control circuitry. The embedded hardware then applies the appropriate haptic effect.

The signal specifying which haptic effect(s) to play is referred to herein as a haptic playback track. The haptic playback track according to example embodiments can be designed or generated using a DAW (an electronic device or application software used for recording, editing and producing audio files such as an NLE), a VR/AR system, and/or a particle effects library.

An NLE according to example embodiments is a form of audio, video or image editing where the original content is not modified in the course of editing. The edits in an NLE are specified and modified by specialized software.

One type of an NLE is the *"Adobe After Effects"* application software by Adobe Systems, Inc. that is used for altering video into a system of layers organized on a timeline to create composites from video files such as still images and/or motion footage.

According to example embodiments, haptics can be rendered for the beating of a virtual drum in an VR/AR system by creating a tactile haptic pattern. The tactile haptic pattern can be designed or generated by observing the positions of the virtual drum (or the positions of a virtual object hitting the virtual drum) during playback of the video, and assigning the haptics to the observed positions of the virtual drum on a video timeline. Alternatively, the tactile haptic pattern can be designed by placing a haptic emitter on the virtual drum, and observing the movement of the haptic emitter during playback. The tactile haptic pattern is designed by cross-referencing the movement of the haptic emitter with the images of the virtual drum on the video timeline. The tactile haptic pattern is then rendered on the VR/AR system to a user.

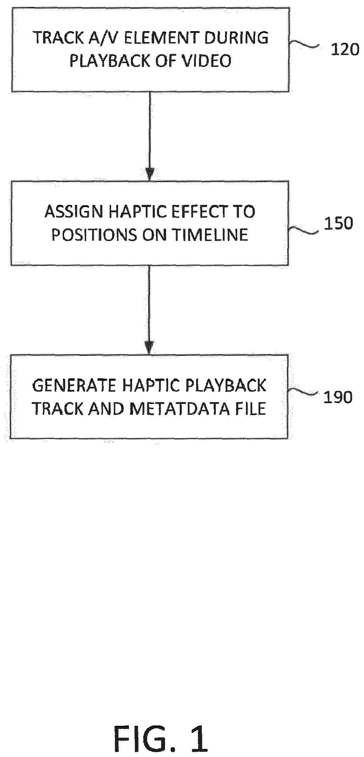

FIG. 1 is a flow diagram of designing haptics according to example embodiments.

Referring to FIG. 1, the designing of haptics 100 includes tracking an audio/visual ("A/V") element in realtime during playback of a video, at 120. The A/V element can be, for instance, an object, an avatar or phenomena in the video. According to example embodiments, realtime means performing a task with substantially no delay or with negligible delay, and appearing to a user as being performed almost instantaneously.

Once composites of the A/V element are organized in a timeline, a haptic effect for the A/V element is assigned to different positions of the A/V element in the timeline based on the tracking of the A/V element to generate assigned-haptic effect positions, at 150.

A haptic playback track, and, optionally, a metadata file, are then generated based on the assigned-haptic effect positions of the A/V element in the timeline, at 190. The metadata file can include the spatial data, and the haptic playback track.

The haptic playback track, and optionally, the metadata file, can be output to a haptically-enabled device.

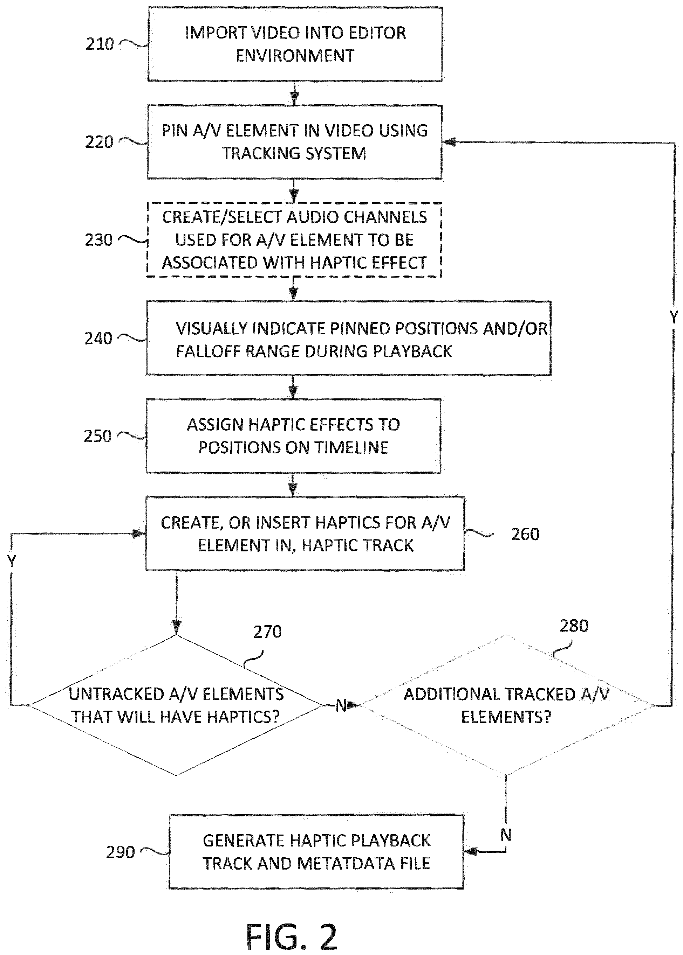

Detailed explanations of the designing haptic feedback using an editing system, a VR/AR system, a realtime editing system and a particle effects library according to example embodiments are provided below.FIG. 2 is a flow diagram of designing haptic feedback with an editing system according to an example embodiment.

Referring to FIG. 2, a video can be imported into an editing environment of an editing system, at 210. The video can be a 360-degree video. A 360-degree video is a video recording where a view in every direction is recorded at the same time using an omnidirectional camera or a collection of cameras. An A/V element (e.g., a drum being hit, a buzzing bee, etc.) in the video to be associated or rendered with haptics is selected, and tracked in realtime using a tracking system to pin a point on the A/V element, at 220. An A/V element can be any object or event such as gun shots, explosions, engines, electricity, weather, natural disasters, running, falling, etc. The A/V element can have a compelling sound or motion.

At 230, if using audio channels/tracks (for instance, in a NLE) to route the haptics to an actuator via an audio-haptic driver, one or more audio channels to be used for the A/V element are selected, or created. The use of the audio-haptic driver may require distinguishing between audio channels used for audio, and audio channels used for haptics.

The video is then played back. Playback can be viewed through the editing environment on a computer, a mobile device or a head-mounted display ("HMD"). During playback of a 360-degree video, a viewer has control of the viewing direction like a panorama. Thus, the viewer can pan around the video to visually follow the A/V element from different angles or perspectives.

During playback of the video, pinned positions/coordinates of the A/V element are visually shown to obtain spatial data, at 240. A falloff range of the haptic effect for the A/V element can be set. Thus, the tracking of the A/V element includes obtaining the spatial data of the A/V element by visually tracking the pinned points/coordinates and/or the falloff range of the A/V element during the playback of the video.

Composites of the A/V element are then organized in a desired timeline. At 250, haptic effects are assigned to different positions of the A/V element on the timeline by associating the spatial data (or the pinned points/coordinates and/or falloff range) of the A/V element with the different positions of the A/V element on the timeline.

The haptic effects can be assigned in realtime based on how the editor and/or viewer/user prefers or desires the haptics are to be rendered, for instance, full ambience, point-of-view ("POV"), character selection, gaze of a character, touch, emphasized three-dimensional ("3D") objects, and/or actuator selection. A viewer's preferences can be implemented by maintaining all of the data, and using the metadata (cross-referenced with the viewer's preferences) to determine the haptic tracks to play. The haptic tracks can be generated in advance or in real time.

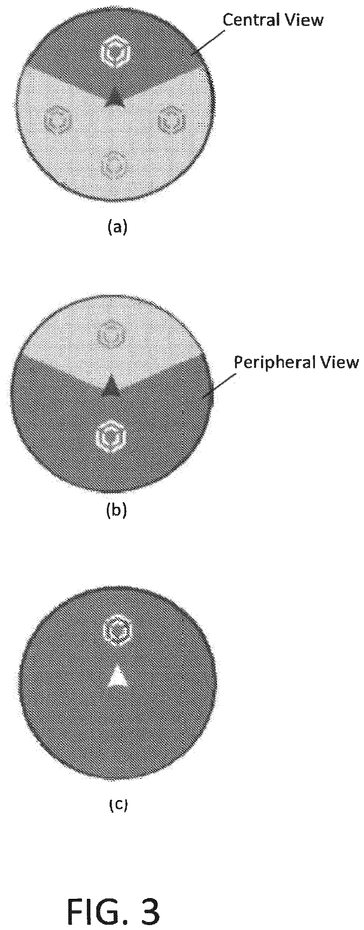

FIGS. 3, 4 and 6-9 are diagrams of haptic effects according to example embodiments.

Haptic effects can be assigned based on a POV. One type of POV is full ambience where haptic effects can be assigned to all actions but at different strengths. Emphasis can be placed on a particular POV, as shown in FIG. 3. Referring to FIG. 3, in (a), emphasis is placed on visual actions in a central view. In (b), emphasis is placed on non-visual actions in a peripheral view and/or out of a POV. In (c), emphasis is place on all actions in a 360-degree view.

Full ambience-driven haptic effects can be achieved using a single haptic track, and can be rendered on any haptically-enabled device (e.g., a mobile device, a HMD, a computer, etc.). Full ambience-driven haptic effects are ideal for 360-degree Action cameras where the A/V element is grounded by a common object (e.g., a jet interior or a bike).

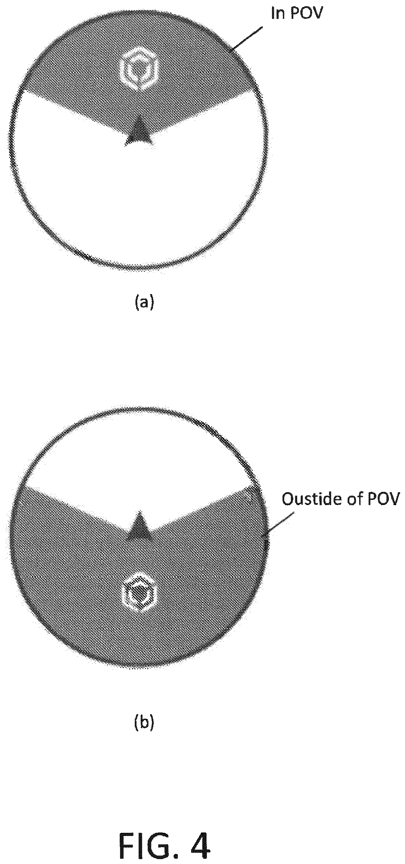

In POV-driven haptic effects, all possible angles of a 360-degree video can be treated like traditional content by identifying several key angles to use as reference points, and applying haptic effects as if they are separate videos. Referring to FIG. 4, the haptics can be rendered for actions in the POV, as shown in (a). Or, for ambient awareness, the haptics can be inverted to render haptic effects for actions outside the POV, as shown in (b) of FIG. 4. POV-driven haptic effects for a visual element may require awareness of the direction being viewed (such as in head tracking).

To assign POV-driven haptic effects to an audio element in the video, binaural audio is preferred. Binaural audio is audio created using two microphones to create a 3-D stereo sound sensation. In order to render POV-driven haptic effects on a HMD, the HMD may need haptic peripherals.

POV-driven haptic effects are ideal for any general content use case.

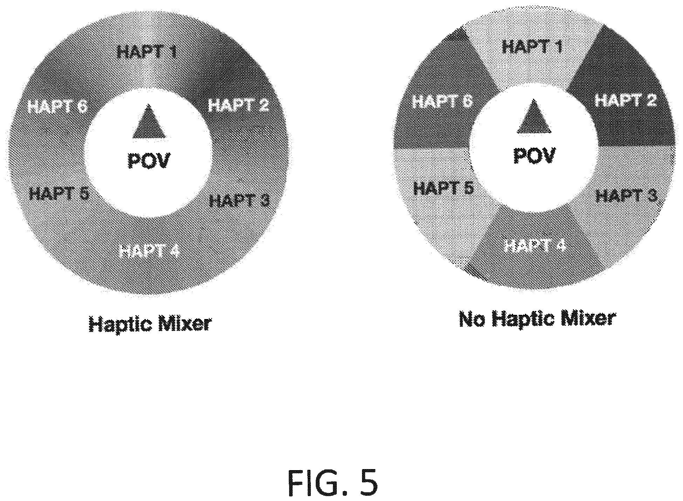

FIG. 5 is a diagram of spatialized haptics according to example embodiments.

Referring to FIG. 5, because haptic effects can be spatialized, or assigned to all actions in, for instance, a full ambience POV-driven haptic effect, a haptic mixer can be used to blend the haptic effects to create a smooth transition from one haptic effect to another. Without a mixer, the transition from one haptic effect from another haptic effect may be abrupt when, for example, panning.

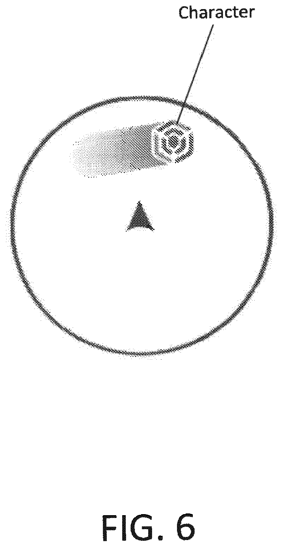

In character-driven haptic effects, the haptics are assigned based on the action of a single character, as shown in FIG. 6. Character-driven haptic effects can be achieved using a single haptic track, but are more preferably achieved using spatialized haptics. Spatialization allows a user to track the location of the character. In order to track the character's motion, a "hot or cold" style of spatialization can be used. "Hot or cold" style of spatialization refers to modulating a haptic track or effect associated with a character. For instance, as a character that is out of a field-of-view ("FOV") approaches the FOV, the haptic effect(s) associated with the character can be rendered softly. As the character enters the FOV, the strength of the haptic effect(s) can reach peak. As another example, "hot or cold" style of spatialization can be used such that a user feels what is outside of their FOV to encourage him/her to find the source of the haptic effect(s). Character-driven haptic effects may require awareness of the direction being viewed (such as in head tracking).

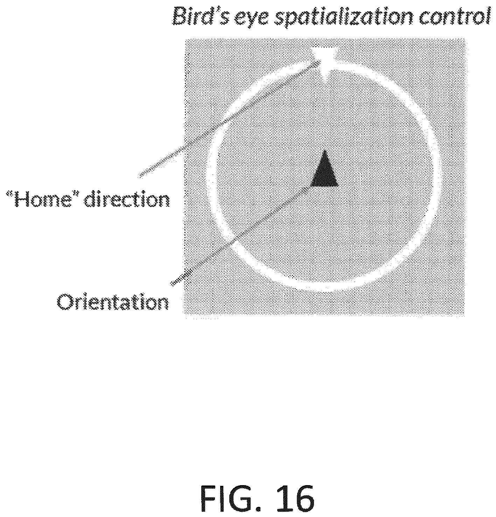

For instance, referring to FIG. 16, which is an image of haptic editing window according to an example embodiment, a "home" direction and an orientation is shown from a bird's eye view.

Due to the complexity of the tracking the location and motion of the character (especially in a 360-degree video), advanced design tools are generally needed for creating character-driven haptic effects. For instance, algorithm options can include play visible only, play all, play all-focus visible, play all-focus hidden, play hidden only, etc.

To assign character-driven haptic effects to an audio element in the video, binaural audio is preferred. In order to render character-driven haptic effects on a HMD, the HMD may need haptic peripherals.

Character-driven haptic effects are ideal for advertisement focusing on an object or character, video shorts with a limited number of characters, and foreshadowing character haptics.

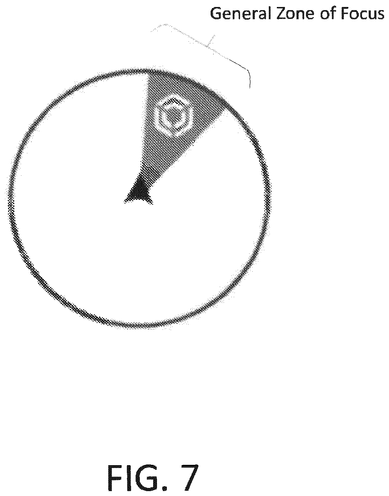

In gaze-driven haptic effects, haptics are assigned based on a general zone where a user is visually focused or looking, as shown in FIG. 7. Eye-tracking, which can be done on a mobile device or a HMD, is optimal for gaze-driven haptic effects. Gaze-driven haptic effects can be used with foveated rendering, which is a graphics rendering technique which uses eye-tracking with a VR headset to reduce rendering workload by reducing the image quality in the peripheral vision (outside the zone gazed by the fovea in the eye).

Gaze-driven haptic effects have additional complexity for realtime haptic events and authoring. To assign gaze-driven haptic effects to an audio element in the video, binaural audio is preferred.

Gaze-driven haptic effects are ideal for live events (such as sports, a theatrical performance, etc.), and advertisements focused on a product.

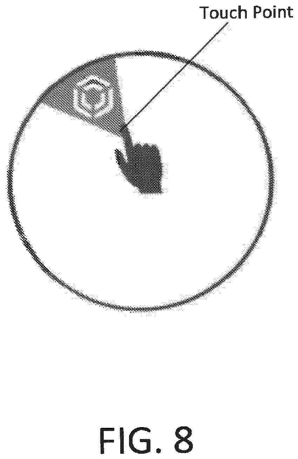

In touch-driven haptic effects, haptics are assigned based on a touch point of a user, as shown in FIG. 8. Touch-driven haptic effects can be achieved by tracking where a user is touching, which can be done on a mobile device with a capacitive screen or any hand-based peripheral. Alternatively, empty hand tracking can be used to track the viewer's hands when viewing within an HMD.

Touch-driven haptic effects are generally used when a user is watching a 360-degree video, for instance, without the use of a HMD. When using a HMD, a hand-based peripheral or split controller that maintains hand contact is used. To assign touch-driven haptic effects to an audio element in the video, binaural audio is preferred.

Touch-driven haptic effects are ideal for environmental exploration and video games.

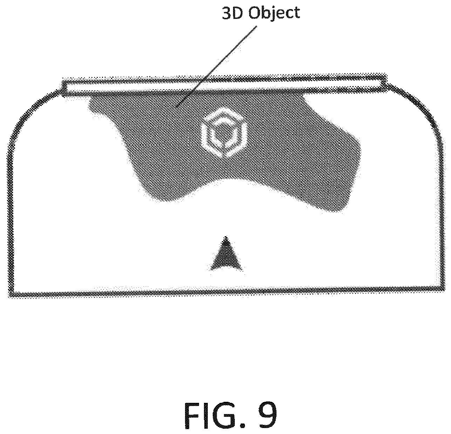

In 3D-focused haptic effects, haptics are assigned 3D objects viewed in a virtual space, as shown in FIG. 9. The 3D objects can appear to "pop" out of the virtual setting as an intended design aesthetic. The 3D-focused haptic effects can be used to further emphasize the appearance of the 3D objects that, for instance, may have been chosen by a creator to apply the 3D effects to. 3D-focused haptic effects can be used when traditional 2D content has been enhanced with 3D sequences (for instance, when a viewer would wear 3D goggles to view the effect).

3D-focused haptic effects are suitable for virtual or simulated theater environments. 3D-focused haptic effects can be authored to stereoscopic video. Viewing in an HMD while rendering 3D-focused haptic effects (likely with the use of peripherals) is preferred to achieve the desired effect. 3D-focused haptic effects work well with HMD touch-driven haptic effects.

3D-focused haptic effects are ideal for non 360-video content with stereoscopic 3D effects.

Referring back to FIG. 2, at 260, a haptic track is created based on the haptic effects on the timeline, or by inserting the haptic effects on the timeline into a desired haptic track.

A determination is made as to whether there are untracked A/V elements that will have haptics, at 270. If there are untracked A/V elements that will have haptics, the corresponding haptic effects are inserted into the haptic track.

A determination is made as to whether there is an additional A/V element that will be tracked, at 280. If there is an additional A/V element that will be tracked, the process is repeated starting at 220.

At 290, a haptic playback track, and optionally, a metadata file, is generated. The haptic playback track can be comprised of a single mixed haptic track or a several haptic tracks. The single mixed haptic track, for instance, can comprise of one or more tracked A/V elements and/or one or more untracked A/V elements. The metadata file can include the spatial data, and the haptic playback track.

The haptic playback track, and optionally, the metadata file, can be output to a haptically-enabled device.

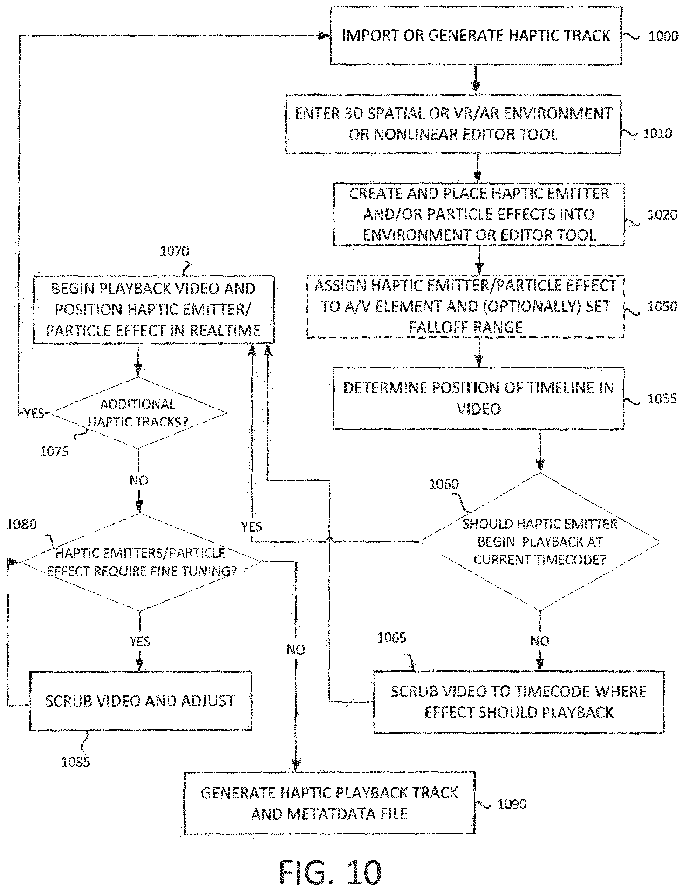

FIG. 10 is a flow diagram of designing haptics with a VR/AR system or realtime editing system according to an example embodiment.

Referring to FIG. 10, the designing of haptics with a VR/AR system or realtime editing system include importing or generating a haptic track for spatial content, at 1000.

At 1010, a haptic emitter is placed in a 3D spatial environment such as within a game engine like, for instance, "Unity 3D" or "Unreal Engine", a VR/AR environment or a realtime editing environment of an editor tool. A haptic emitter is created and placed into the respective environment, at 1020. The haptic emitter can be created and placed into the respective environment by drawing a waveform or shape in the spatial environment in 2D or 3D. For instance, when drawing in 3D, the Y-axis may control the strength, the X-axis may control the time, and the Z-axis may control frequency. Alternatively, parameters other than strength, time and frequency can be used.

At 1050, the haptic emitter can, optionally, be assigned to an A/V element in a video. A falloff range can be set for the haptic effect. For example, if a bee is buzzing around an avatar's head, a haptic emitter can be placed on the bee. Alternatively, by being placed within a 3D environment, a creator can easily see where the haptic emitter is in relation to the A/V element, place the haptic emitter by the A/V element without assigning the haptic emitter directly to the A/V element, and move haptic emitter along with the A/V element.

In an example embodiment, a particle effect can be assigned to the A/V element in the video, at 1050. A particle effect is a gaming or computer graphics technique of using a large number of very small sprites, 3D models or other graphic objects (referred to herein as "particles") to simulate certain dynamic events or phenomena (e.g., highly chaotic systems, natural phenomena, energy or processes caused by chemical reactions such as fire, explosions, smoke, laser beams, moving water, snow, rock falls, stars, etc.) that are hard to reproduce with conventional rendering techniques.

A position of a desired timeline in the video is determined, at 1055.

Then, at 1060, it is determined if the haptic emitter should begin playback at the current timecode. If it is determined that the haptic emitter/particle effect should not begin playback at the current timecode, the video is scrubbed to the timecode where the haptic effect/particle effect should begin playback at, at 1065. If the haptic emitter/particle effect should begin playback at the current timecode, playback of the video begins, and the haptic emitter/particle effect should be moved and positioned by the editor (i.e., a person) in realtime to correspond to the positions of the A/V element, at 1070.

While moving and positioning the haptic emitter/particle effect during playback of the video, spatial data is obtained for the haptic emitter/particle effect. The spatial data of the haptic emitter/particle effect is then associated with the different positions of the A/V element in the timeline. For instance, in the bee example, when the bee is visible, the haptic effect is inserted in the timeline. When the bee is not visible, the haptic effect is not inserted in the timeline.

At 1075, a determination is made as to whether additional haptic tracks are needed. If additional haptic tracks are needed, the process is repeated starting at 1000.

If additional haptic tracks are not needed, a determination is made as to whether the haptic emitter/particle effect requires fine tuning, at 1080. If the haptic emitter/particle effect requires fine tuning, the video is scrubbed and adjusted, at 1085.

Fine tuning of the particle effect can include adjusting parameters of the particle effect. Particle effect parameters can include, for instance, the spawning rate (how many particles are generated per unit of time), the particles' initial velocity vector (the direction they are emitted upon creation), particle lifetime (the length of time each individual particle exists before disappearing) and particle color. The parameter can be made "fuzzy" (as opposed to a precise numeric value) by the editor specifying a central value and the degree of randomness allowable on either side of the central value (i.e., the average particle's lifetime might be 50 frames ±20%).

If fine tuning of the haptic emitter/particle effect is not necessary, a haptic playback track is generated, at 1090. A metadata file including the spatial data can also be generated, at 1090.

The haptic playback track, and the metadata file, can be output to a haptically-enabled device (such as a mobile device, a console, a computer, etc.), a handheld game controller, a VR/AR controller or another peripheral device (e.g., a game pad, a computer mouse, a trackball, a keyboard, a tablet, a microphone, and a headset, or a wearable).

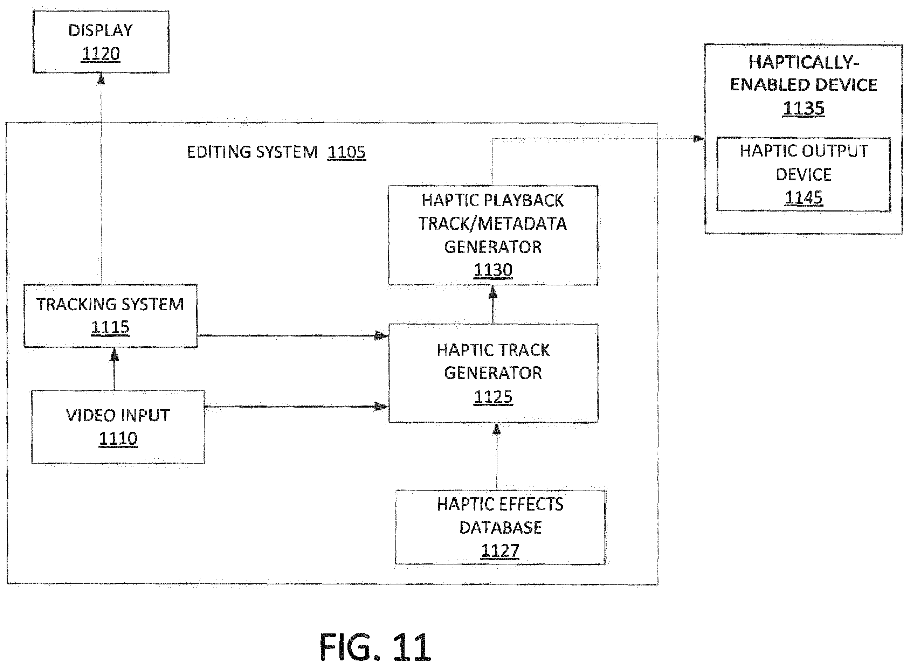

FIG. 11 is a block diagram of an editing system according to an example embodiment.

Referring to FIG. 11, an editing system 1105 according to example embodiments receives a video through a video input 1110. Editing system 1105 can be an NLE. The video can be a 360-degree video.

Editing system 1105 includes a tracking system 1115 that tracks an A/V element in the video that is selected to be associated or rendered with haptics. Tracking system 1115 pins points on the A/V element during playback.

Playback can be viewed through windows on a visual display 1120 connected to editing system 1105. Visual display 1120 can be a computer screen, a mobile device screed or a head-mounted display ("HMD"). During playback of the video, the editor can control of the viewing direction like a panorama. Thus, the editor can pan around the video to visually follow the A/V element from different angles or perspectives.

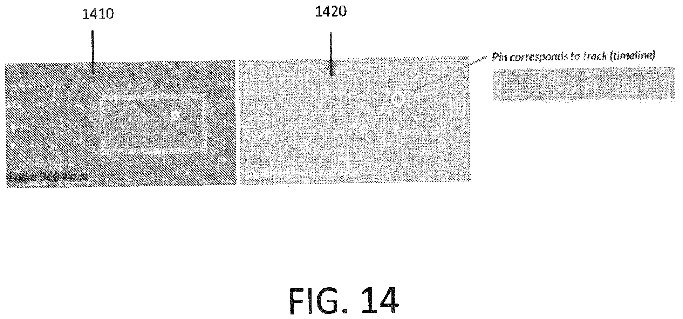

For instance, referring to FIG. 14, which is an image of a haptic editing window according to an example embodiment, a preview window 1410 can display the video. During playback of the video, pinned positions/coordinates of the A/V element can be visually shown in a tracking window 1420 on visual display 1120 shown in FIG. 11 to obtain spatial data. Alternatively, a haptic track can be pinned to an A/V element in the video, and the coordinates of the A/V element can be tracked.

As shown in FIG. 11, editing system 1105 includes a haptic track generator 1125 that generates a haptic track based on composites of the A/V element organized by an editor in a desired timeline using the video received from video input 1110, and haptic effects assigned by the editor to different positions of the A/V element on the timeline by associating the spatial data (or the pinned points/coordinates and/or falloff range) of the A/V element received from the tracking system 1115 with the different positions of the A/V element on the timeline.

The haptic effects can be obtained from a haptic effects database 1127 in editing system 1105. Alternatively, the haptic effects can be obtained from an external source.

The haptic effects can be assigned based on how the editor desires the haptics are to be rendered, for instance, full ambience, point-of-view ("POV"), character selection, gaze of a character, touch, emphasized three-dimensional ("3D") objects, and/or actuator selection, as discussed above.

If there are untracked A/V elements that will have haptics, haptic track generator 1125 inserts the corresponding haptic effects into the haptic track.

If there are additional A/V elements that will be tracked, the video is played back again, and tracking system 1115 pins points of the A/V element during playback. Alternatively, tracking system 1115 can be configured to track more than one A/V element during playback of the video.

A haptic playback track generator 1130 generates a haptic playback track, and optionally, a metadata file. The haptic playback track can be comprised of a single mixed haptic track or a several haptic tracks. The single mixed haptic track, for instance, can comprise of one or more tracked A/V elements and/or one or more untracked A/V elements. The metadata file can include the spatial data, and the haptic playback track.

Haptic playback track generator 1130 outputs one or more of the haptic playback track or a haptic file containing multiple haptic playback tracks, and optionally, the metadata file, to a haptically-enabled device 1135.

Editing system 1105 can be electrically and wirelessly connected to haptically-enabled device 1135. Haptically-enabled device 1135 can be a mobile device, a console, a computer, a handheld game controller, a VR/AR controller or another peripheral device (e.g., a game pad, a computer mouse, a trackball, a keyboard, a tablet, a microphone, and a headset, or a wearable).

The haptic effect(s) is applied by haptically-enabled device 1135. Haptic effects can be applied as a vibrotactile haptic effect, a deformation haptic effect, an ultrasonic haptic effect, and/or an electrostatic friction haptic effect. Application of the haptic effects can include applying a vibration using a tactile, deformation, ultrasonic and/or electrostatic source.

Haptically-enabled device 1135 according to example embodiments can also include a haptic output device 1145. Haptic output device 1145 is a device that includes mechanisms configured to output any form of haptic effects, such as vibrotactile haptic effects, electrostatic friction haptic effects, deformation haptic effects, ultrasonic haptic effects, etc. in response to the haptic drive signal.

Haptic output device 1145 can be an electromechanical actuator, such as a piezoelectric actuator or an electroactive polymer ("EAP") actuator, to apply the haptic effect(s). In an example embodiment, the piezoelectric actuator can be a ceramic actuator or a macro-fiber composite ("MFC") actuator. However, example embodiments are not limited thereto. For instance, an electric motor, an electro-magnetic actuator, a voice coil, a shape memory alloy, a solenoid, an eccentric rotating mass motor ("ERM"), a linear resonant actuator ("LRA"), or a high bandwidth actuator can be used in addition to haptic output device 1145.

In an alternative example embodiment, a direct current ("DC") motor can be used, alternatively or in addition, to haptic output device 1145 to apply the vibration.

In other example embodiments, haptically-enabled device 1135 can include non-mechanical devices to apply the haptic effect(s). The non-mechanical devices can include electrodes implanted near muscle spindles of a user to excite the muscle spindles using electrical currents firing at the same rate as sensory stimulations that produce the real (or natural) movement, a device that uses electrostatic friction ("ESF") or ultrasonic surface friction ("USF"), a device that induces acoustic radiation pressure with an ultrasonic haptic transducer, a device that uses a haptic substrate and a flexible or deformable surface or shape changing device and that can be attached to an individual's body, a device that provides projected haptic output such as forced-air (e.g., a puff of air using an air jet), a laser-based projectile, a sound-based projectile, etc.

According to an example embodiment, the laser-based projectile uses laser energy to ionize air molecules in a concentrated region mid-air so as to provide plasma (a concentrated mixture of positive and negative particles). The laser can be a femtosecond laser that emits pulses at very fast and very intense paces. The faster the laser, the safer for humans to touch. The laser-based projectile can appear as a hologram that is haptic and interactive. When the plasma comes into contact with an individual's skin, the individual can sense the vibrations of energized air molecules in the concentrated region. Sensations on the individual skin are caused by the waves that are generated when the individual interacts with plasma in mid-air. Accordingly, haptic effects can be provided to the individual by subjecting the individual to a plasma concentrated region. Alternatively, or additionally, haptic effects can be provided to the individual by subjecting the individual to the vibrations generated by directed sound energy.

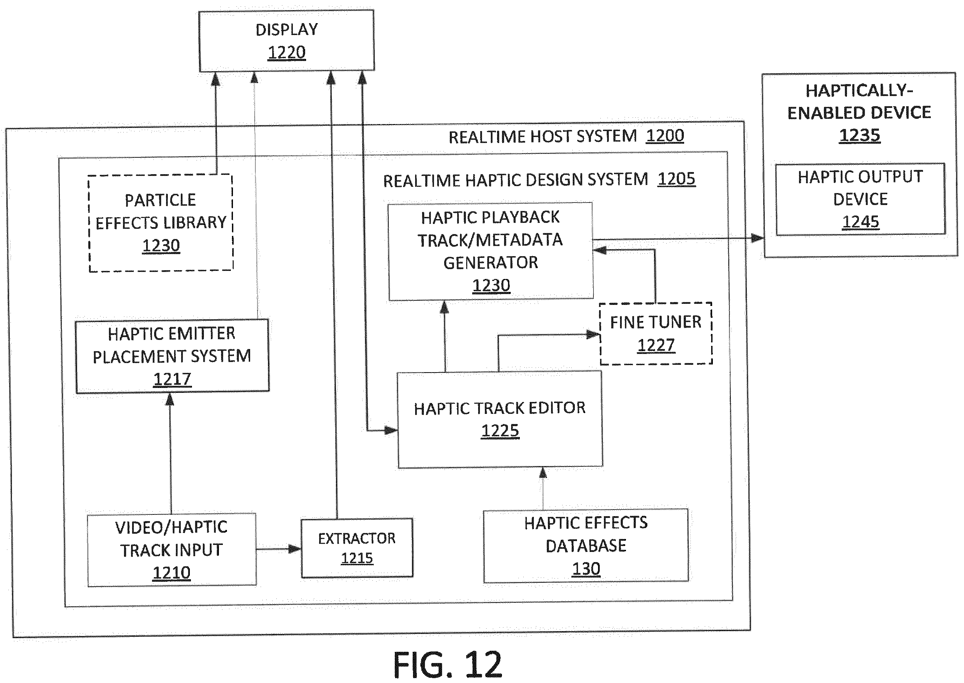

FIG. 12 is a block diagram of a realtime host system according to an example embodiment.

Referring to FIG. 12, a realtime host system 1200 according to example embodiments can be a virtual reality/augmented reality system or any realtime editing system. Host system 1200 includes a realtime haptic design system 1205 that receives a haptic track through a haptic track input 1210. Realtime haptic design system 1205 can be an NLE. The video can be a 360-degree video.

Spatial content of the haptic track is extracted by extractor 1215 into a 3D spatial environment, a VR/AR environment or a realtime editing environment, and rendered on a display 1220.

A haptic emitter placement system 1217 creates a haptic emitter, and places the haptic emitter in the environment displayed on display 1220. The haptic emitter can be created and placed into the respective environment by drawing a waveform or shape in the spatial environment.

The haptic emitter is assigned to an A/V element in a corresponding video. A falloff range can be set for the haptic effect.

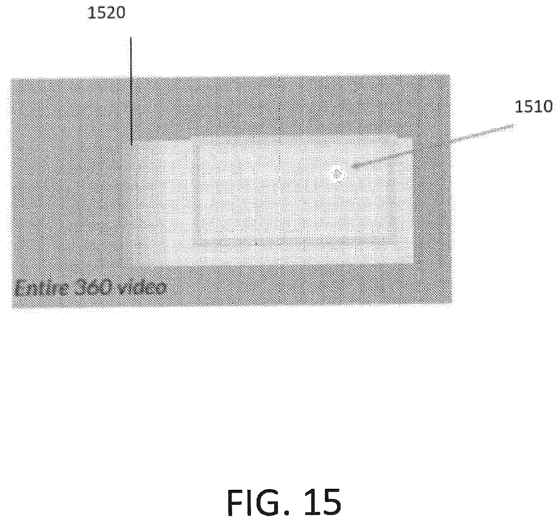

For instance, referring to FIG. 15, which is an image of a haptic editing window according to an example embodiment, a secondary window 1510 represents the change area/decay of haptic emitter. The feathered edges 1520 represent the falloff of the haptic emitter.

In an example embodiment, a particle effect from a particle effects library 1230 can be assigned to the A/V element in the video.

A position of a desired timeline in the video is determined.

While moving and positioning the haptic emitter/particle effect during playback of the video, a haptic track editor 1225 modulates or edits the haptic track by obtaining spatial data for the haptic emitter/particle effect, and associating the spatial data of the haptic emitter/particle effect with the different positions of the A/V element in the timeline. Modulation of the haptic track can be done in realtime.

If the haptic emitter/particle effect requires fine tuning, the video is scrubbed and adjusted by a fine tuner 1227.

Fine tuning of the haptic emitter can cause a change in at least one parameter (e.g., location, magnitude (or intensity), frequency, duration, etc.) of the haptic effect.

According to an example embodiment, high level parameters that define a particular haptic effect include location, magnitude, frequency, and duration. Low level parameters such as streaming motor commands could also be used to render a haptic effect. Some variation of these parameters can change the feel of the haptic effect, and/or can further cause the haptic effect to be considered "dynamic."

Fine tuning of the particle effect can include adjusting parameters of the particle effect. Particle effect parameters can include, for instance, the spawning rate (how many particles are generated per unit of time), the particles' initial velocity vector (the direction they are emitted upon creation), particle lifetime (the length of time each individual particle exists before disappearing), particle color. The parameter can be made "fuzzy" (as opposed to a precise numeric value) by the editor specifying a central value and the degree of randomness allowable on either side of the central value (i.e., the average particle's lifetime might be 50 frames ± 20%).

After fine tuning of the haptic emitter/particle effect, a haptic playback track is generated by haptic playback track generator 1230. A metadata file including the spatial data can also be generated.

The haptic playback track generator 1230 outputs the haptic playback track, and the metadata file, a haptically-enabled device 1235.

Haptically-enabled device 1235 according to example embodiments can also include a haptic output device 1245. Haptic output device 1245 is a device that includes mechanisms configured to output any form of haptic effects.

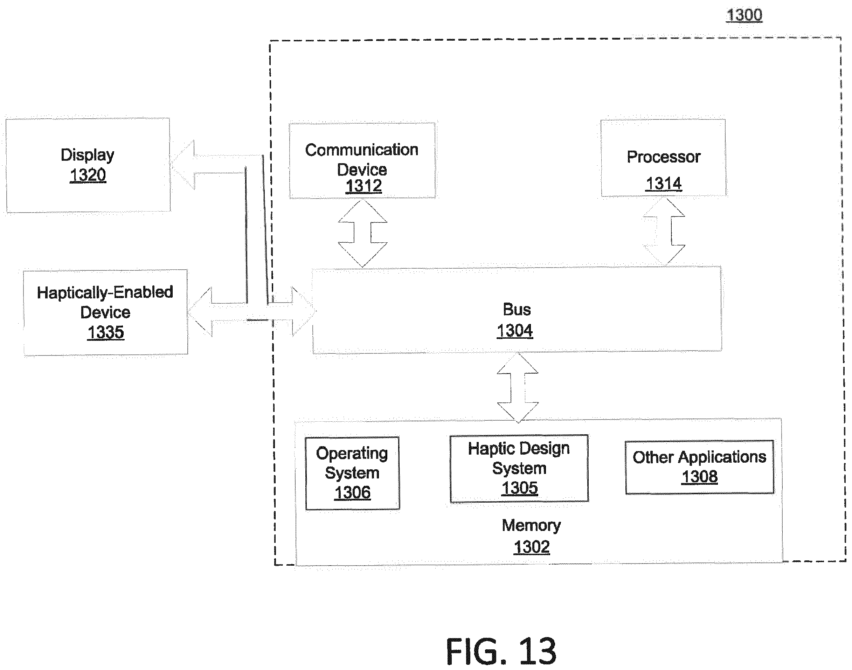

FIG. 13 is a block diagram of a haptic design system in an electronic device according to an example embodiment.

Referring to FIG. 13, a system 1300 in an electronic device according to an example embodiment provides haptic editing functionality for the device.

Although shown as a single system, the functionality of system 1300 can be implemented as a distributed system. System 1300 includes a bus 1304 or other communication mechanism for communicating information, and a processor 1314 coupled to bus 1304 for processing information. Processor 1314 can be any type of general or specific purpose processor. System 1300 further includes a memory 1302 for storing information and instructions to be executed by processor 1314. Memory 1302 can be comprised of any combination of random access memory ("RAM"), read only memory ("ROM"), static storage such as a magnetic or optical disk, or any other type of non-transitory computer-readable medium.

A non-transitory computer-readable medium can be any available medium that can be accessed by processor 1314, and can include both a volatile and nonvolatile medium, a removable and non-removable medium, a communication medium, and a storage medium. A communication medium can include computer readable instructions, data structures, program modules, or other data in a modulated data signal such as a carrier wave or other transport mechanism, and can include any other form of an information delivery medium known in the art. A storage medium can include RAM, flash memory, ROM, erasable programmable read-only memory ("EPROM"), electrically erasable programmable read-only memory ("EEPROM"), registers, hard disk, a removable disk, a compact disk read-only memory ("CD-ROM"), or any other form of a storage medium known in the art.

According to an example embodiment, memory 1302 stores software modules that provide functionality when executed by processor 1314. The software modules include an operating system 1306 that provides operating system functionality for system 1300, as well as the rest of the electronic device. The software modules can also include a haptic design system 1305 that provides haptic mixing and modulating functionality (as described above). However, example embodiments are not limited thereto. For instance, haptic design system 1305 can be external to the electronic device, for example, in a central gaming console in communication with the electronic device. The software modules further include other applications 1308, such as, a video-to-haptic conversion algorithm.

System 1300 can further include a communication device 1312 (e.g., a network interface card) that provides wireless network communication for infrared, radio, Wi-Fi, or cellular network communications. Alternatively, communication device 1312 can provide a wired network connection (e.g., a cable/Ethernet/fiber-optic connection, or a modem).

Processor 1314 is further coupled via bus 1304 to a visual display 1320 for displaying a graphical representation or a user interface to an end-user. Visual display 1320 can be a touch-sensitive input device (i.e., a touch screen) configured to send and receive signals from processor 1314, and can be a multi-touch touch screen.

System 1300 further includes a haptically-enabled device 1335. Processor 1314 can transmit a haptic signal associated with a haptic effect to haptically-enabled device 1335, which in turn outputs haptic effects (e.g., vibrotactile haptic effects or deformation haptic effects).

While some example embodiments are described with the use of a virtual reality ("VR")/augmented reality ("AR") system or a realtime editing system and with the use of an editing system in other example embodiments, the embodiments can be used together in the same workflow.

According to example embodiments, haptic data is mixed and modulated in realtime based on the position of the user input/output, designed haptic tracks, preferences and hardware. A dynamic 360-degree piece of content, it is desirable to mix and modulate in realtime because, for instance, a user's FOV cannot be predicted.

According to example embodiments, haptic feedback is designed from haptics spatialized by cross-referencing multiple positions of an A/V element with a haptic emitter, or assigning haptics to pinned positions of the A/V element.

The foregoing is illustrative of various example embodiments and is not to be construed as limiting thereof. Accordingly, all such modifications are intended to be included within the scope of the disclosure as defined in the claims.

## Claims

1. A method of designing haptics, comprising:
tracking an audio/visual (A/V) element in realtime during playback of a video;
assigning a haptic effect in realtime for the A/V element to different positions of the A/V element on a timeline based on the tracking of the A/V element to generate assigned-haptic effect positions; and
generating a haptic playback track based on the assigned-haptic effect positions of the A/V element on the timeline.

2. The method of claim 1, wherein
the tracking of the A/V element includes
creating and placing a haptic emitter into a spatial environment of the video,
moving the haptic emitter in the spatial environment with the A/V element in realtime during the playback of the video, and
obtaining spatial data for the haptic emitter during the moving of the haptic emitter, and
the assigning of the haptic effect for the A/V element includes associating the spatial data of the haptic emitter with the different positions of the A/V element on the timeline in realtime;
wherein the method preferably further comprises generating a metadata file including the spatial data.

3. The method of any one of the preceding claims, wherein the assigning of the haptic effect for the A/V element further includes setting a falloff range for the haptic effect in realtime and/or wherein the creating and placing of the haptic emitter includes drawing a waveform or shape in the spatial environment in 2D or 3D.

4. The method of any one of the preceding claims, wherein
the tracking of the A/V element includes
placing a particle effect into a spatial environment of the video,
creating a path for the A/V element to follow by moving the particle effect in the spatial environment in realtime during the playback of the video, and
obtaining spatial data for the A/V element during the moving of the particle effect, and
the assigning of the haptic effect for the A/V element includes associating the spatial data of the A/V element with the different positions of the A/V element on the timeline in realtime;
wherein the generating of the haptic playback track preferably includes adjusting parameters of the particle effect.

5. The method of any one of the preceding claims, wherein
the tracking of the A/V element includes obtaining spatial data of the A/V element by visually tracking the A/V element in realtime during the playback of the video, and
the assigning of the haptic effect for the A/V element includes associating the spatial data of the A/V element with the different positions of the A/V element on the timeline in realtime.

6. A non-transitory computer readable medium having instructions stored thereon that, when executed by a processor, cause the processor to perform the operations comprising:
tracking an audio/visual (A/V) element in realtime during playback of a video;
assigning a haptic effect in realtime for the A/V element to different positions of the A/V element on a timeline based on the tracking of the A/V element to generate assigned-haptic effect positions; and
generating a haptic playback track based on the assigned-haptic effect positions of the A/V element on the timeline.

7. The non-transitory computer readable medium of claim 6, wherein
the tracking of the A/V element includes
creating and placing a haptic emitter into a spatial environment of the video,
moving the haptic emitter in the spatial environment with the A/V element in realtime during the playback of the video, and
obtaining spatial data for the haptic emitter during the moving of the haptic emitter, and
the assigning of the haptic effect for the A/V element includes associating the spatial data of the haptic emitter with the different positions of the A/V element on the timeline in realtime;
wherein the non-transitory computer readable medium of further comprises:
generating a metadata file including the spatial data.

8. The non-transitory computer readable medium of claim 6 or 7, wherein the assigning of the haptic effect for the A/V element further includes setting a falloff range for the haptic effect in realtime.

9. The non-transitory computer readable medium of claim 6, 7 or 8, wherein the creating and placing of the haptic emitter includes drawing a waveform or shape in the spatial environment in 2D or 3D.

10. The non-transitory computer readable medium of any one of the preceding claims 6 to 9, wherein
the tracking of the A/V element includes
placing a particle effect into a spatial environment of the video,
creating a path for the A/V element to follow by moving the particle effect in the spatial environment in realtime during the playback of the video, and
obtaining spatial data for the A/V element during the moving of the particle effect, and
the assigning of the haptic effect for the A/V element includes associating the spatial data of the A/V element with the different positions of the A/V element on the timeline in realtime.
wherein the generating of the haptic playback track preferably includes adjusting parameters of the particle effect.

11. The non-transitory computer readable medium of any one of the preceding claims 6 to 10, wherein
the tracking of the A/V element includes obtaining spatial data of the A/V element by visually tracking the A/V element in realtime during the playback of the video, and
the assigning of the haptic effect for the A/V element includes associating the spatial data of the A/V element with the different positions of the A/V element on the timeline in realtime.

12. A haptic design system, comprising:
a tracking system configured to tracking an audio/visual (A/V) element in realtime during playback of a video, wherein the tracking system is configured to allow a haptic effect to be assigned in realtime for the A/V element to different positions of the A/V element on a timeline based on the tracking of the A/V element to generate assigned-haptic effect positions; and
a haptic playback track generator generating a haptic playback track based on the assigned-haptic effect positions of the A/V element on the timeline.

13. The haptic design system of claim 12, wherein the tracking system includes
a haptic emitter placement system configured to place a haptic emitter into a spatial environment of the video, the haptic emitter being moveable in the spatial environment with the A/V element in realtime during the playback of the video, and
a haptic track editor configured to obtain spatial data for the haptic emitter during the moving of the haptic emitter, and associate the spatial data of the haptic emitter with the different positions of the A/V element on the timeline in realtime.

14. The haptic design system of claim 12 or 13, wherein the tracking system includes
a haptic emitter placement system configured to place a particle effect into a spatial environment of the video, wherein a path for the A/V element to follow is created by moving the particle effect in the spatial environment in realtime during the playback of the video, and
a haptic track editor configured to obtain spatial data for the A/V element during the moving of the particle effect, and associating the spatial data of the A/V element with the different positions of the A/V element on the timeline in realtime.

15. The haptic design system of claim 12, 13 or 14, wherein the tracking system includes
a haptic track editor configured to obtain spatial data of the A/V element by visually tracking the A/V element in realtime during the playback of the video, and associating the spatial data of the A/V element with the different positions of the A/V element on the timeline in realtime.
